# EUROPEAN PATENT SPECIFICATION

(11) **EP 4 312 342 B1**
(45) Date of publication and mention of the grant of the patent: **02.09.2026**
(21) Application number: 23183685.9
(22) Date of filing: 05.07.2023
(51) Int. Cl.: H02J 7/00, H02J 7/70

(54) **CHARGER**
LADEGERÄT
CHARGEUR

(30) Priority: 20.07.2022 CN 202221910405 U
(43) Date of publication of application: 31.01.2024
(73) Proprietor: Techtronic Cordless GP, Anderson, SC 29621 (US)
(72) Inventor: HUANG, Yu, Dongguan City (CN); YANG, Tao, Dongguan City (CN); ZHAO, Jiang, Dongguan City (CN)
(74) Representative: Meissner Bolte Partnerschaft mbB

(56) References cited:
- US-A1- 2003 090 234
- US-B2- 9 596 774

## Description

### Technical Field

The present utility model relates to the field of chargers, and in particular to a charger for household appliances.

### Background Art

Chargers of various sizes and types are commonly used for household appliances. Electronic components or elements inside these chargers generate and accumulate heat during use, so there is a need for heat dissipation in the chargers. Charger housings, such as side walls, typically feature ventilation holes for ventilation and heat dissipation. However, these ventilation holes are not effective in dissipating heat from the charger to the external environment and cannot effectively prevent external foreign objects from entering, which poses a safety hazard.

In addition, a charger usually has several anti-slip foot pads installed at the bottom, which are typically made of rubber and can deform elastically. Therefore, these anti-slip foot pads can prevent slipping and provide shock absorption, cushioning, and other benefits when the charger is placed on a surface, such as a table, and during its use and storage. Typically, the anti-slip foot pad includes a base and a column that extends from the base. The bottom of the charger is provided with several holes, each of which has a dimension smaller than the external diameter of the column. During installation of the foot pads, the columns are inserted into these holes and held in place through their own elastic deformation. There is an interference fit between the columns and the holes, so the columns remain in a deformed state after being inserted into the holes. Over time, the columns can experience fatigue or ageing, causing the foot pads to become loose from the holes, which may result in displacement or even detachment.

### Summary of the Utility Model

The present utility model provides an improved charger, which overcomes the shortcomings of the prior art.

The present utility model discloses a charger, including a housing, the housing including a bottom plate and a pair of side walls, and at least one of the side walls being provided with a plurality of fins extending into the housing. Each fin includes: a base segment, which has a first end connected to the side wall and extends parallel to the bottom plate; and a tilting segment, which extends at an angle a relative to the base segment from a second end of the base segment. Some of the fins are installed at an upper portion of the side wall such that the tilting segments thereof extend towards the bottom plate, and the rest of the fins are installed at a lower portion of the side wall such that the tilting segments thereof extend away from the bottom plate.

According to an embodiment of the present utility model, the bottom plate is provided with at least one bottom hole, each bottom hole being provided with an anti-slip pad installed therein, and the anti-slip pad including: a base; a head; and a column located between and connecting the base and the head in an axial direction; wherein the column has a radial dimension smaller than those of the base and the head.

According to an embodiment of the present utility model, the head is dome-shaped.

According to an embodiment of the present utility model, a peripheral surface of the head is provided with at least one head recess.

According to an embodiment of the present utility model, a peripheral surface of the column is provided with at least one column recess axially corresponding to the at least one head recess.

According to an embodiment of the present utility model, the head is inserted into the housing of the charger through the bottom hole, the bottom hole having a radial dimension smaller than that of the head, and the base abutting against an outer surface of the bottom plate.

According to an embodiment of the present utility model, the bottom hole is in clearance fit with the column.

According to an embodiment of the present utility model, the bottom plate is provided with a boss surrounding the bottom hole, and the base is disposed inside the boss and protrudes beyond the boss.

According to an embodiment of the present utility model, an outer end of the bottom hole is provided with a rounded corner for guiding the insertion of the head.

According to an embodiment of the present utility model, the angle α at which the tilting segment extends relative to the base segment is greater than 90 degrees and less than 180 degrees.

According to an embodiment of the present utility model, the bottom plate is further provided with a heat dissipation through-hole.

According to an embodiment of the present utility model, components within the housing of the charger are installed such that a centre of gravity of the charger is lower than a geometric centre of the housing.

Compared with anti-slip pads of the prior art, the anti-slip pad according to the present utility model undergoes compression deformation only at the head during insertion into the housing, and after the anti-slip pad is inserted into the housing, the head is restored to its original shape and abuts against the bottom plate in its original shape, preventing it from being withdrawn and thus preventing the anti-slip pad from falling off or falling out of the housing. In addition, the column is in clearance fit with the bottom hole of the housing, so that during the use of the charger, the anti-slip pad does not undergo any deformation and does not experience fatigue or ageing early over time, which extends the service life of the anti-slip pad. In addition, the charger of the present utility model is provided with fins that not only allow for air circulation and better heat dissipation, but also conceal the electronic components and other elements inside the housing from view outside of the housing. The fins also block ventilation holes to prevent liquids from directly reaching the electronic components and other elements inside the housing through the ventilation holes. Furthermore, the components inside the housing are installed close to the bottom, lowering the centre of gravity and allowing for more stable placement on various supporting surfaces and tilted surfaces.

### Brief Description of the Drawings

Fig. 1 is a perspective view of a charger according to the present utility model.
Fig. 2 is a perspective view of fins of the charger.
Fig. 3 shows a schematic arrangement of anti-slip pads on a bottom plate.
Fig. 4 shows a schematic installation cross-sectional view of the anti-slip pad on the bottom plate.
Fig. 5 is a perspective view of the anti-slip pad.
Fig. 6 shows a close-up view of the anti-slip pad when installed on the bottom plate.

List of reference numerals: 100 - Charger; 101 - Bottom plate; 102, 103 - Side wall, 104 - Back plate; 105 - Boss; 106 - Bottom hole; 107 - Rounded corner; 111 - Fin; 112 - Base segment; 113 - Tilting segment; 200 - Anti-slip pad; 201 - Base; 202 - Column; 203 - Head; 204 - Column recess; 205 - Head recess.

### Detailed Description of Embodiments

The preferred embodiments of the present utility model are further described in detail below with reference to the accompanying drawings of the description.

The present utility model relates to a charger which is provided with at least one anti-slip pad and fins. Of course, such anti-slip pads can be applied to other household appliances or other equipment requiring anti-slip and vibration reduction, including but not limited to notebook computers, desktop computers, mobile phone cases, calculators, fans, water cups, storage boxes, trash bins, etc.

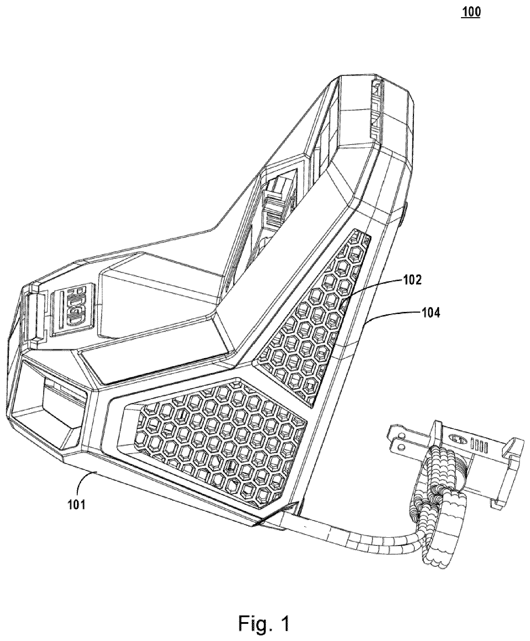

The present utility model takes a charger as an example for description. As shown in Figs. 1 to 3, a charger 100 includes a housing. The housing includes a front portion, a bottom plate 101, a pair of side walls 102 and 103, and a back plate 104. The housing of the charger accommodates a variety of components such as PCB boards, inverters, diodes, transistors, and other electronic elements, which function as control parts of the charger to regulate, convert, or otherwise adapt power from a power source for use in charging. Fig. 1 shows a charging cable extending from a corner at the bottom of the charger between the side wall 102 and the back plate 104. One end of the charging cable is connected to a power plug and an adapter, and the power plug is configured to be inserted into a power source, such as a charging socket or an external power grid.

It should be noted that the various parts of the housing can be separate from each other and assembled together to form the housing. Alternatively, some of these parts may be integrally formed as shown in the figure in which the front portion and the bottom plate 101 are integrally formed and the pair of side walls 102 and 103 and the back plate 104 are integrally formed. However, this is only an example and there can be other forms of combinations.

Within the housing, large and heavy components (e.g. inverters and coils) are concentrated in the lower half of the housing, close to the bottom of the housing. This helps to lower the centre of gravity of the charger 100 such that it is lower than the geometric centre of the housing. As a result, the charger is more stable when placed on a surface and can resist certain impacts and overturning moments. For example, when the charger is placed on a sloping surface, the charger is similar to a tumbler that will not fall over. Moreover, when combined with the anti-slip pad described hereinafter, the charger can be stably placed on a sloping surface at a certain angle. Also because of this, as shown in Fig. 1, the overall shape and contour of the housing of the charger 100 is generally L-shaped but not limited to this and the housing may have other contour shapes.

In addition, as electronic components and other elements inside the housing generate heat during operation, it is necessary to dissipate the heat to the outside of the housing. To this end, as shown in the figure, a plurality of ventilation holes are provided on the side walls 102 and 103 for heat dissipation and ventilation purposes. Fins are provided on the side walls, and these fins serve two purposes: firstly, to block the ventilation holes and prevent liquids from directly reaching the PCB board(s) through the ventilation holes; and secondly, to allow air to circulate, thereby facilitating heat dissipation.

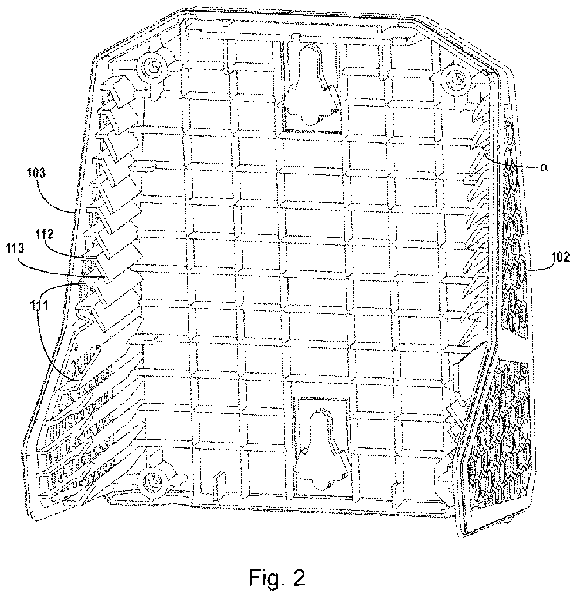

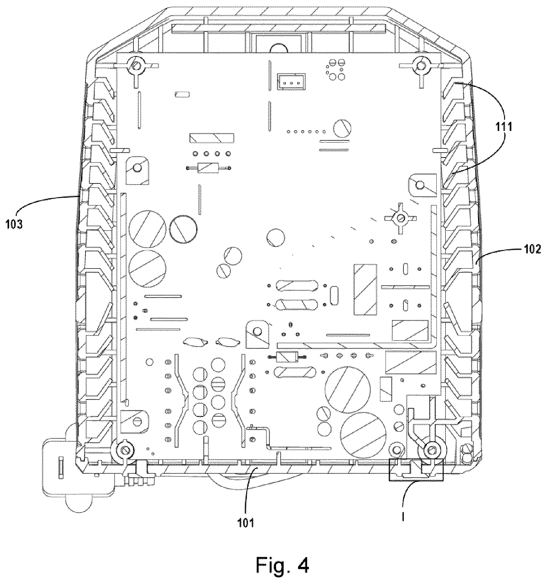

As shown in Figs. 2 and 4, the pair of side walls are each provided with a plurality of fins 111 extending into the housing, but this is only a preferred arrangement. Fins may also be provided on only one of the side walls. Each of the fins 111 includes a base segment 112 and a tilting segment 113. The base segment 112 is connected to the side wall at its first end and extends perpendicular to the side wall and thus parallel to the bottom plate 101. The tilting segment 113 extends obliquely from the second end of the base segment 112 at an angle α relative to the base segment 112. The angle α is greater than 90 degrees and less than 180 degrees, for example, 95 degrees, 100 degrees, 120 degrees, 140 degrees, 145 degrees, 150 degrees, 155 degrees, or 160 degrees. The angle α is greater than 90 degrees to facilitate the flow of air. If the angle α is less than or equal to 90 degrees, the air inside and outside the housing may be directly blocked by the tilting segments 113, which is not conducive to air circulation. The angle α is less than 180 degrees to shield the components inside the housing.

Thus, the fins 111 can guide airflow. For example, hot air inside the housing can flow obliquely along the tilting segment 113 to the base segment 112 and then be redirected at the base segment 112 to flow horizontally to the outside of the housing. Similarly, the cold air outside the housing firstly enters through the through-hole in the side wall, then flows along the horizontal base segment 112 to the tilting segment 113, and then flows inward along the tilting segment 113 deep into the housing. Fig. 2 shows the fins 111 installed in two configurations on each side wall. These fins 111 are divided into two groups. One group of fins are installed on an upper portion of the side wall, while the other group of fins are installed on a lower portion of the side wall. The fins 111 on the upper portion of the side wall are installed such that the tilting segments 113 extend obliquely downward towards the bottom plate 101, and the fins 111 on the lower portion are installed such that the tilting segments 113 extend obliquely upward away from the bottom plate 101. Since the hot air usually rises to the upper space within the housing and the cold air is located at the lower space within the housing, such installation makes it easier for the hot air to flow and be discharged from the upper space of the housing along the inclined downward-extending tilting segments 113, while the external cold air can enter the inside of the housing along the fins 111 at the lower part of the housing and flow to the upper space within the housing along the inclined upward-extending tilting segments 113, and then mix with the hot air there to form turbulence, or drive the hot air to be discharged more quickly, thereby rapidly reducing the temperature within the housing and accelerating the air circulation inside and outside the housing.

As shown in Fig. 4, in an embodiment, electronic components with intense heat generation, such as inverters and metal-oxide-semiconductor field-effect transistors (MOSFETs), are arranged in the lower part of the interior of the housing. The heat emitted by the electronic components with intense heat generation heats up the air, which then rises to the upper part of the housing and can be more easily discharged along the inclined downward-extending tilting segments 113, while the external cold air enters the inside of the housing along the fins 111 at the lower part of the housing, thereby forming an air circulation that provides enhanced heat dissipation without the need for a cooling fan. In some embodiments, the bottom plate can also be provided with one or more heat dissipation through-holes (not shown). As will be described below, the bottom plate is provided with bosses 105, creating a gap between the bottom plate and a supporting surface (e.g. the ground) for the charger. External air can enter the inside of the housing from the heat dissipation through-hole(s) in the bottom plate, which can provide enhanced heat dissipation capability.

The fins 111 can also be installed on the side walls of the housing in other configurations, which are not part of the invention. For example, contrary to that shown in Fig. 2, on each side wall, the upper fins 111 are installed such that the tilting segments 113 extend obliquely upward away from the bottom plate 101, and the lower fins 111 are installed such that the tilting segments 113 extend obliquely downward towards the bottom plate 101. Alternatively, on both side walls, the fins 111 may be installed such that all the tilting segments 113 extend obliquely upward, or the fins 111 may be installed such that all the tilting segments 113 extend obliquely downward. Alternatively, the fins 111 on one side wall may be installed such that all their tilting segments 113 extend obliquely upward, while the fins 111 on the other side wall may be installed such that all their tilting segments 113 extend obliquely downward. Alternatively, the fins 111 on one side wall may be installed such that their tilting segments 113 all extend obliquely upward or all extend obliquely downward, while the fins 111 on the other side wall may be installed such that some of the tilting segments 113 extend obliquely upward and the rest of the tilting segments 113 extend obliquely downward. Alternatively, the fins 111 on one side wall may be installed such that the upper tilting segments 113 extend obliquely upward (or downward) and the lower tilting segments 113 extend obliquely downward (or upward), while the fins 111 on the other side wall may be installed in an opposite manner such that the upper tilting segments 113 extend obliquely downward (or upward) and the lower tilting segments 113 extend obliquely upward (or downward). The above installation methods are only examples, not a limitation. Other combinations can also be used for installation. Of course, the fins 111 may not include the horizontal base segments 112 and only include the tilting segments 113 extending directly from the side walls, and these tilting segments 113 are installed on the side walls in the various configurations and combinations as described above.

The following describes the anti-slip pad and its installation on the charger. The anti-slip pad can increase friction and play a role in making the charger slip-resistant, stable, and cushioned, making the placement of the charger more secure. The anti-slip pad is typically installed on the bottom of the charger but is not limited to this location and may also be installed at other positions on the charger, such as on the back plate 104 or at other locations where slip resistance is required. The anti-slip pad may be made of an elastic material, which enables its elastic deformation, such as being made of a rubber or an elastomeric material.

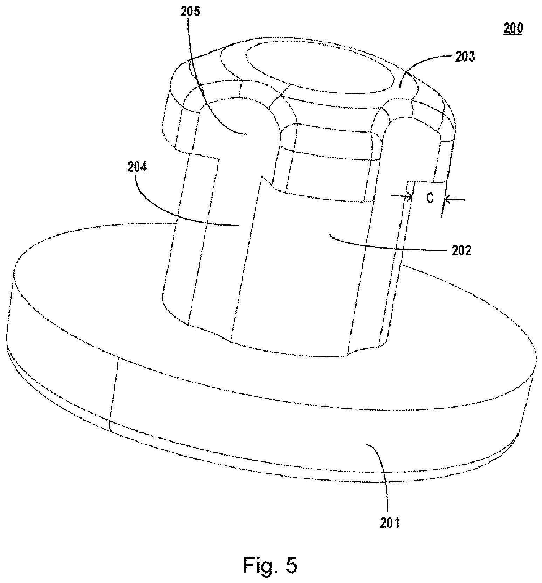

Referring to Fig. 5, the anti-slip pad 200 includes: a base 201; a head 203; and a column 202 located between and connecting the base 201 and the head 203 in an axial direction, wherein the column 202 has a radial dimension smaller than that of the base 201 and the head 203. The bottom of the base serves as a placement surface to make contact with a surface of a table or the like, so it is shown in Fig. 5 that the radial dimension of the base 201 is the largest to increase the area of contact of the bottom of the base. However, the configuration is not limited to this. For example, alternatively, the radial dimension of the head 203 may be the same as, nearly the same as, or close to the radial dimension of the base 201.

The base 201, head 203, and column 202 may be coaxial to facilitate manufacturing and installation. However, any two or all three of them may also be slightly off-axis with respect to each other. The base 201 may be circular but may also be of other shapes, such as rectangular, square, triangular, or other regular or irregular geometric shapes. The column 202 may be cylindrical but not limited thereto and may have other shapes such as rectangular, pyramidal, conical, or other regular or irregular geometric shapes. The head 203 is similar to a mushroom head shape and may, for example, be a dome shape, but not limited thereto, and may have other shapes such as rectangular, square, triangular, or other regular or irregular geometric shapes, as long as the radial dimension of all or a portion of the outer circumference of the head is larger than that of the column.

As described above, the head may also be off-axis from the column, i.e. the centre axes of the two may be offset from each other. Fig. 5 shows that the head 203 extends radially beyond the column 202 by a distance c, which may be, for example, 0.5 mm or other values such as 0.3 mm, 0.2 mm, 0.4 mm, 0.6 mm, 0.8 mm, 1 mm, or other values that are greater or smaller. In addition, the radial dimensions (e.g. diameter) and/or axial dimensions (e.g. height or thickness) of the base, the column, and the head are not specifically limited, but are designed according to the specific application.

In order to facilitate the installation and insertion of the anti-slip pad, the outer peripheral surfaces of the head and column may be respectively provided with the same or different number of recesses. These recesses can be uniformly or non-uniformly distributed, either completely or partially, around the outer periphery of the head or column. As shown in Fig. 5, four head recesses 205 are uniformly spaced along the outer peripheral surface of the head 203. However, this is a preferred arrangement and the arrangement is not limited to this. For example, one, two, three, five or more head recesses can be arranged uniformly or non-uniformly along the periphery of the head. The outer peripheral surface of the column 202 is also provided with four column recesses 204 that are uniformly spaced along the periphery. These column recesses and the head recesses 205 are axially aligned with each other, i.e. are connected to each other. However, this arrangement is not limited to four recesses, and instead, one, two, three, five or more column recesses can be uniformly or non-uniformly spaced along the periphery of the column.

It should be noted that the head recess(es) and column recess(es) are separately provided, and it is not necessary for both to exist simultaneously. For example, only the head recess(es) or only the column recess(es) may be provided. In addition, it is not necessary for the head recess(es) and column recess(es) to be connected and/or aligned with each other (for example, they may not be connected but aligned in the axial direction). For example, the number of head recesses and column recesses may be the same or different, and some or all of the head recesses and column recesses may be connected and/or aligned with each other, or none of them are connected and/or aligned with each other, for instance, all of them may be offset from each other in the circumferential direction. In addition, it is shown in the figure that the head recesses and the column recesses run through the head and the column in the axial direction to form through-channels, respectively, but this is only an example and the configuration is not limited thereto, and both of the head recess(es) and the column recess(es) may be provided at different positions of the head and the column in a smaller size without running through the head and the column, or only one of the head recess(es) and the column recess(es) may be provided in a running-through manner in the axial direction. Moreover, there are no specific restrictions on the shape, orientation, circumferential extension, and radial recessing depth of the head recess and column recess. Instead, the head recess and column recess are designed according to specific applications, as long as they can provide space for the elastic deformation of the head and column, as further explained below.

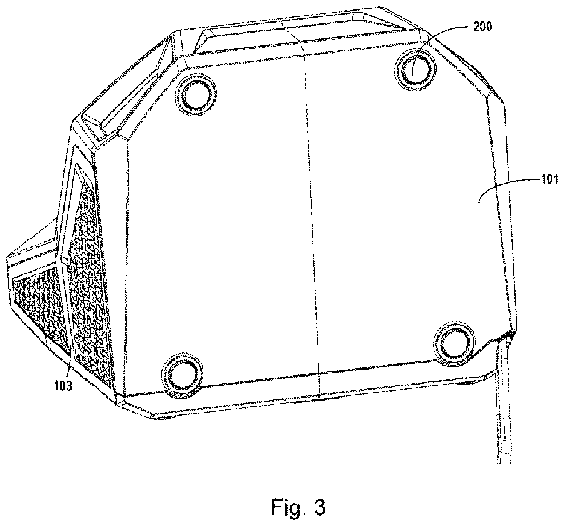

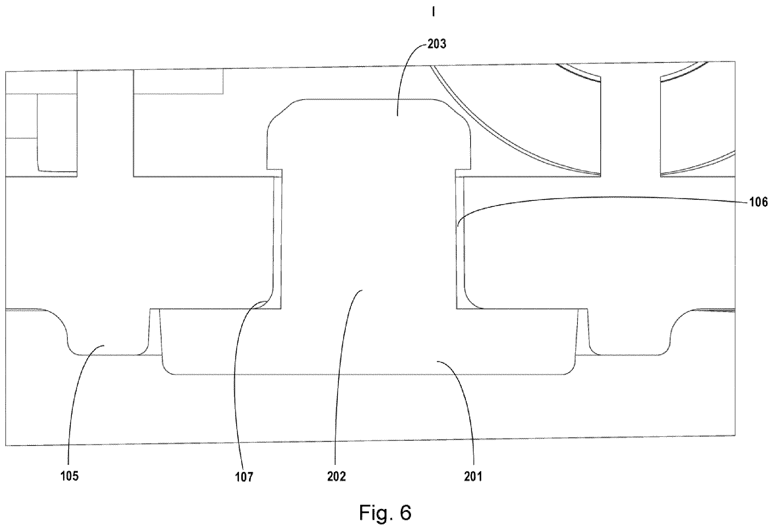

Fig. 3 shows four anti-slip pads 200 installed on the bottom of the charger housing (i.e. on the bottom plate 101). However, this is only an example and the configuration is not limited to this. The number of the anti-slip pad(s) 200 can be set to 2, 3, or only 1, or even more, and the distance between the pads and the arrangement position and pattern of the pad(s) on the bottom plate are not specifically limited, but are designed according to specific applications. Figs. 4 and 6 show the installation of a single anti-slip pad in the bottom plate in a cross-sectional view. The bottom plate 101 is provided with a bottom hole 106 corresponding to the anti-slip pad, and the anti-slip pad is installed into the bottom hole. The radial dimension of the bottom hole 106 is smaller than the radial dimensions of the head 203 and the base 201, and the radial dimension of the bottom hole 106 is also smaller than the radial dimension of the column, allowing for a clearance fit between the bottom hole and the anti-slip pad when the anti-slip pad is inserted into the bottom hole. The shape of the bottom hole 106 corresponds to the column 202 and may be a cylindrical through-hole, a rectangular through-hole, a pyramidal through-hole, a conical through-hole, or other regular or irregular geometric shapes of through-holes, as described above. The bottom plate is provided with corresponding bosses 105 around the bottom holes 106, the bosses being annular bosses projecting outward from the bottom plate for supporting the entire charger when it is placed on, for example, a table. The inside of the boss is hollow to accommodate the base 201 of the anti-slip pad and the height of the boss is less than the thickness of the base 201. An outer end of the bottom hole 106, close to the boss, is provided with a rounded corner 107 for guiding the insertion of the head 203.

When the anti-slip pad is inserted into the housing, the head 203 is inserted into the bottom hole 106 along the rounded corner 107. As the radial dimension of the bottom hole 106 is smaller than the radial dimension of the head 203, the head 203 comes into contact with and is elastically compressed by the inner wall of the bottom hole 106 during insertion. The presence of the head recesses 205 allows for some elastic deformation of the head 203, which facilitates the insertion process. When the head 203 passes completely through the bottom hole 106 and enters the housing, the head is no longer elastically compressed and is restored to its original shape. At this point, the head 203 abuts against and is blocked by the area around the bottom hole and cannot be withdrawn from the bottom hole, while the base 201 abuts against the outer surface of the bottom plate 101. Specifically, the base 201 is disposed in the space inside the boss 105 and protrudes beyond the boss, such that when the charger is placed on, for example, a desktop, the base 201 is compressed and provides support for the entire charger together with the boss 105, offering anti-slip, shock absorption, and cushioning functions.

When the anti-slip pad is inserted, there is a clearance fit between the bottom hole 106 and the column 202, and the gap between the inner wall of the bottom hole and the outer peripheral surface of the column is, for example, 0.1 mm, of course, which is only an example, and the gap may be other values such as 0.2 mm, 0.3 mm, 0.4 mm, or other larger or smaller values. The presence of the column recesses 204 allows for additional space between the bottom hole and the column even if the radial dimensions of the bottom hole and the column are the same, nearly the same, or close, enabling a clearance fit between the two. In addition, the column recess and the head recess may also form an airflow channel between the inside and outside of the housing, making it easier to insert the anti-slip pad into the housing under certain conditions (such as vacuum or negative pressure). In addition, the thickness of the bottom plate can be the same as the height of the column, such that the head and base of the anti-slip pad can fit tightly against the bottom plate, or it can be slightly smaller than the height of the column, as shown in Fig. 6, such that the anti-slip pad can move up and down in the axial direction to a certain extent.

Compared with anti-slip pads of the prior art, the anti-slip pad according to the present utility model undergoes compression deformation only at the head during insertion into the housing, and after the anti-slip pad is inserted into the housing, the head is restored to its original shape and abuts against the bottom plate in its original shape, preventing it from being withdrawn and thus preventing the anti-slip pad from falling off or falling out of the housing. In addition, the column is in clearance fit with the bottom hole of the housing, so that during the use of the charger, the anti-slip pad does not undergo any deformation and does not experience fatigue or ageing early over time, which extends the service life of the anti-slip pad. In addition, the charger of the present utility model is provided with fins that not only allow for air circulation and better heat dissipation, but also conceal the electronic components and other elements inside the housing from view outside of the housing. The fins also block ventilation holes to prevent liquids from directly reaching the electronic components and other elements inside the housing through the ventilation holes. Furthermore, the components inside the housing are installed close to the bottom, lowering the centre of gravity and allowing for more stable placement on various supporting surfaces and tilted surfaces.

Although specific embodiments of the present utility model have been described above, it should be understood by those skilled in the art that these are illustrative only, and the scope of protection of the present utility model is defined by the appended claims.

## Claims

1. A charger (100), **characterized by** comprising a housing, the housing comprising a bottom plate (101) and a pair of side walls (102, 103), and at least one of the side walls being provided with a plurality of fins (111) extending into the housing, wherein each fin (111) comprises:
a base segment (112), which has a first end connected to the side wall and extends parallel to the bottom plate (101); and
a tilting segment (113), which extends at an angle α relative to the base segment (112) from a second end of the base segment (112),
some of the fins (111) are installed at an upper portion of the side wall such that the tilting segments (113) thereof extend towards the bottom plate (101), and the rest of the fins (111) are installed at a lower portion of the side wall such that the tilting segments (113) thereof extend away from the bottom plate (101).

2. The charger (100) according to Claim 1, **characterized in that** the bottom plate (101) is provided with at least one bottom hole (106), each bottom hole (106) being provided with an anti-slip pad (200) installed therein, and the anti-slip pad (200) comprising:
a base (201);
a head (203); and
a column (202) located between and connecting the base (201) and the head (203) in an axial direction;
wherein the column (202) has a radial dimension smaller than that of the base (201) and the head (203).

3. The charger (100) according to Claim 2, **characterized in that** the head (203) is dome-shaped.

4. The charger (100) according to Claim 2, **characterized in that** a peripheral surface of the head (203) is provided with at least one head recess (205).

5. The charger (100) according to Claim 4, **characterized in that** a peripheral surface of the column (202) is provided with at least one column recess (204) axially corresponding to the at least one head recess (205).

6. The charger (100) according to Claim 2, **characterized in that** the head (203) is inserted into the housing of the charger (100) through the bottom hole (106), the bottom hole (106) having a radial dimension smaller than that of the head (203), and the base (201) abutting against an outer surface of the bottom plate (101).

7. The charger (100) according to Claim 6, **characterized in that** the bottom hole (106) is in clearance fit with the column (202).

8. The charger (100) according to Claim 6, **characterized in that** the bottom plate (101) is provided with a boss (105) surrounding the bottom hole (106), and the base (201) is disposed inside the boss (105) and protrudes beyond the boss (105).

9. The charger (100) according to Claim 6, **characterized in that** an outer end of the bottom hole (106) is provided with a rounded corner (107) for guiding the insertion of the head (203).

10. The charger (100) according to Claim 1 **characterized in that** the angle α is greater than 90 degrees and less than 180 degrees.

11. The charger (100) according to Claim 1, **characterized in that** the bottom plate (101) is further provided with a heat dissipation through-hole.

12. The charger (100) according to Claim 1, **characterized in that** components within the housing of the charger (100) are installed such that a centre of gravity of the charger (100) is lower than a geometric centre of the housing.

## Patentansprüche

1. Ladegerät (100), **dadurch gekennzeichnet, dass** es ein Gehäuse umfasst, wobei das Gehäuse eine Bodenplatte (101) und ein Paar Seitenwände (102, 103) umfasst und mindestens eine der Seitenwände mit einer Vielzahl von Rippen (111) versehen ist, die sich in das Gehäuse hinein erstrecken, wobei jede Rippe (111) umfasst:
ein Basissegment (112), das ein erstes Ende aufweist, das mit der Seitenwand verbunden ist und sich parallel zur Bodenplatte (101) erstreckt; und
ein Neigungssegment (113), das sich in einem Winkel α relativ zum Basissegment (112) von einem zweiten Ende des Basissegments (112) aus erstreckt,
einige der Rippen (111) an einem oberen Abschnitt der Seitenwand so eingebaut sind, dass sich deren Neigungssegmente (113) in Richtung der Bodenplatte (101) erstrecken, und die übrigen Rippen (111) an einem unteren Abschnitt der Seitenwand so eingebaut sind, dass sich deren Neigungssegmente (113) von der Bodenplatte (101) weg erstrecken.

2. Ladegerät (100) gemäß Anspruch 1, **dadurch gekennzeichnet, dass** die Bodenplatte (101) mit mindestens einer Bodenöffnung (106) versehen ist, wobei jede Bodenöffnung (106) mit einem darin eingebauten Anti-Rutsch-Pad (200) versehen ist und das Anti-Rutsch-Pad (200) umfasst:
eine Basis (201);
einen Kopf (203); und
eine Säule (202), die sich zwischen der Basis (201) und dem Kopf (203) befindet und diese in axialer Richtung verbindet;
wobei die Säule (202) eine radiale Abmessung aufweist, die kleiner ist als die der Basis (201) und des Kopfes (203).

3. Ladegerät (100) gemäß Anspruch 2, **dadurch gekennzeichnet, dass** der Kopf (203) kuppelförmig ist.

4. Ladegerät (100) gemäß Anspruch 2, **dadurch gekennzeichnet, dass** eine Umfangsfläche des Kopfes (203) mit mindestens einer Kopfaussparung (205) versehen ist.

5. Ladegerät (100) gemäß Anspruch 4, **dadurch gekennzeichnet, dass** eine Umfangsfläche der Säule (202) mit mindestens einer Säulenaussparung (204) versehen ist, die axial der mindestens einen Kopfaussparung (205) entspricht.

6. Ladegerät (100) gemäß Anspruch 2, **dadurch gekennzeichnet, dass** der Kopf (203) durch die Bodenöffnung (106) in das Gehäuse des Ladegeräts (100) eingeführt ist, wobei die Bodenöffnung (106) eine radiale Abmessung aufweist, die kleiner ist als die des Kopfes (203), und die Basis (201) an einer Außenfläche der Bodenplatte (101) anliegt.

7. Ladegerät (100) gemäß Anspruch 6, **dadurch gekennzeichnet, dass** die Bodenöffnung (106) mit der Säule (202) in Spielpassung steht.

8. Ladegerät (100) gemäß Anspruch 6, **dadurch gekennzeichnet, dass** die Bodenplatte (101) mit einem die Bodenöffnung (106) umgebenden Vorsprung (105) versehen ist und die Basis (201) innerhalb des Vorsprungs (105) angeordnet ist und über den Vorsprung (105) hinausragt.

9. Ladegerät (100) gemäß Anspruch 6, **dadurch gekennzeichnet, dass** ein äußeres Ende der Bodenöffnung (106) mit einer abgerundeten Ecke (107) versehen ist, um das Einführen des Kopfes (203) zu führen.

10. Ladegerät (100) gemäß Anspruch 1, **dadurch gekennzeichnet, dass** der Winkel α größer als 90 Grad und kleiner als 180 Grad ist.

11. Ladegerät (100) gemäß Anspruch 1, **dadurch gekennzeichnet, dass** die Bodenplatte (101) ferner mit einem Durchgangsloch zur Wärmeableitung versehen ist.

12. Ladegerät (100) gemäß Anspruch 1, **dadurch gekennzeichnet, dass** Komponenten innerhalb des Gehäuses des Ladegeräts (100) so eingebaut sind, dass ein Schwerpunkt des Ladegeräts (100) tiefer liegt als ein geometrischer Mittelpunkt des Gehäuses.

## Revendications

1. Chargeur (100), **caractérisé en ce qu'**il comprend un boîtier, ledit boîtier comprenant une plaque de fond (101) et une paire de parois latérales (102, 103), et au moins l'une des parois latérales étant pourvue d'une pluralité d'ailettes (111) s'étendant à l'intérieur du boîtier, dans lequel chaque ailette (111) comprend :
un segment de base (112) dont une première extrémité est reliée à la paroi latérale et qui s'étend parallèlement à la plaque de fond (101) ; et
un segment incliné (113) qui s'étend selon un angle α par rapport au segment de base (112) à partir d'une deuxième extrémité du segment de base (112),
certaines des ailettes (111) sont installées au niveau d'une partie supérieure de la paroi latérale de telle sorte que leurs segments inclinés (113) s'étendent vers la plaque de fond (101), et les autres ailettes (111) sont installées au niveau d'une partie inférieure de la paroi latérale de telle sorte que leurs segments inclinés (113) s'étendent à l'opposé de la plaque de fond (101).

2. Chargeur (100) selon la revendication 1, **caractérisé en ce que** la plaque de fond (101) est pourvue d'au moins un trou de fond (106), chaque trou de fond (106) étant pourvu d'un patin antidérapant (200) installé dans celui-ci, et le patin antidérapant (200) comprenant :
une base (201) ;
une tête (203) ; et
une colonne (202) située entre la base (201) et la tête (203) et reliant celles-ci dans une direction axiale ;
dans lequel la colonne (202) a une dimension radiale inférieure à celle de la base (201) et de la tête (203).

3. Chargeur (100) selon la revendication 2, **caractérisé en ce que** la tête (203) est en forme de dôme.

4. Chargeur (100) selon la revendication 2, **caractérisé en ce qu'**une surface périphérique de la tête (203) est pourvue d'au moins un évidement de tête (205).

5. Chargeur (100) selon la revendication 4, **caractérisé en ce qu'**une surface périphérique de la colonne (202) est pourvue d'au moins un évidement de colonne (204) correspondant axialement audit au moins un évidement de tête (205).

6. Chargeur (100) selon la revendication 2, **caractérisé en ce que** la tête (203) est insérée dans le boîtier du chargeur (100) à travers le trou de fond (106), le trou de fond (106) ayant une dimension radiale inférieure à celle de la tête (203), et la base (201) venant en butée contre une surface extérieure de la plaque de fond (101).

7. Chargeur (100) selon la revendication 6, **caractérisé en ce que** le trou de fond (106) est en ajustement avec jeu avec la colonne (202).

8. Chargeur (100) selon la revendication 6, **caractérisé en ce que** la plaque de fond (101) est pourvue d'un bossage (105) entourant le trou de fond (106), et la base (201) est disposée à l'intérieur du bossage (105) et fait saillie au-delà du bossage (105).

9. Chargeur (100) selon la revendication 6, **caractérisé en ce qu'**une extrémité extérieure du trou de fond (106) est pourvue d'un coin arrondi (107) pour guider l'insertion de la tête (203).

10. Chargeur (100) selon la revendication 1, **caractérisé en ce que** l'angle α est supérieur à 90 degrés et inférieur à 180 degrés.

11. Chargeur (100) selon la revendication 1, **caractérisé en ce que** la plaque de fond (101) est en outre pourvue d'un trou traversant de dissipation thermique.

12. Chargeur (100) selon la revendication 1, **caractérisé en ce que** les composants à l'intérieur du boîtier du chargeur (100) sont installés de telle sorte que le centre de gravité du chargeur (100) soit plus bas que le centre géométrique du boîtier.
